# FASCICULE DE BREVET EUROPEEN

(11) **EP 2 193 833 B1**
(45) Date de publication et mention de la délivrance du brevet: **27.06.2012**
(21) Numéro de dépôt: 09290846.6
(22) Date de dépôt: 06.11.2009
(51) Int. Cl.: B01D 53/14, B01D 53/52, B01D 53/62, B01D 53/75, B01D 53/78, B01D 53/96

(54) **Procédé de désacidification d'un gaz par solution absorbante avec démixtion en cours de régénération**
Entsäuerungsverfahren eines Gases durch absorbierende Lösung mit Entmischung bei der Aufbereitung
Method for deacidifying a gas by an absorbing solution with demixing during regeneration

(30) Priorité: 20.11.2008 FR 0806511
(43) Date de publication de la demande: 09.06.2010
(73) Titulaire: IFP Energies nouvelles, 92852 Rueil-Malmaison Cedex (FR)
(72) Inventeur: Bouillon, Pierre-Antoine, 69003 Lyon (FR); Jacquin, Marc, 69002 Lyon (FR); Methivier, Alain, 69004 Lyon (FR)

(56) Documents cités:
- FR-A- 2 877 858
- FR-A- 2 898 284
- FR-A- 2 900 841
- FR-A- 2 900 843

## Description

La présente invention concerne le domaine de la désacidification d'un effluent gazeux au moyen d'une solution absorbante.

Le procédé selon l'invention permet de retirer les composés acides tels le dioxyde de carbone (CO₂) et l'hydrogène sulfuré (H₂S) contenus dans un effluent gazeux. Il peut s'appliquer au traitement d'un gaz naturel, d'un gaz de synthèse ou de fumées issues d'un processus de combustion.

La régénération de la solution absorbante chargée en composés acides est coûteuse, notamment sur le plan de la consommation d'énergie. Ceci représente un inconvénient important, notamment lorsque l'on met en oeuvre la solution absorbante pour capter le CO₂ présent dans des fumées de combustion. En effet si la chaleur nécessaire pour régénérer la solution absorbante est obtenue par combustion d'un combustible fossile, on peut être amené à produire une quantité supplémentaire de CO₂ qui rendrait le captage de CO₂ par absorption inintéressante.

Le document FR 2 898 284 propose de mettre en oeuvre une solution absorbante démixante qui présente la propriété de se fractionner lorsqu'on chauffe ladite solution absorbante chargée en composés acides. La solution se sépare en deux phases : une fraction riche en composés acides et une fraction pauvre en composés acides. Ainsi, le document FR 2 898 284 propose de ne régénérer par distillation que la fraction qui est enrichie en composés acides afin de minimiser l'énergie nécessaire à la régénération de la solution absorbante.

La présente invention vise à exploiter les propriétés de la solution démixante, qui sont décrites dans le document FR 2 898 284 en proposant d'effectuer, au cours de la régénération, une étape de séparation de la solution absorbante en deux fractions afin d'évacuer une portion de la solution absorbante appauvrie en composés acides.

De manière générale, l'invention décrit un procédé de désacidification d'un effluent gazeux comportant au moins un composé acide du groupe constitué par l'hydrogène sulfuré et le dioxyde de carbone, dans lequel on met en contact l'effluent gazeux avec une solution absorbante, la solution absorbante comportant au moins un composé réactif en phase aqueuse, dans une zone de contact (C1) de manière à obtenir un effluent gazeux appauvri en composés acides et une solution absorbante chargée en composés acides, la solution absorbante étant choisie pour sa propriété de former deux phases liquides séparables lorsqu'elle a absorbé une quantité de composés acides et qu'elle est chauffée, et dans lequel on régénère la solution absorbante chargée en composés acides en effectuant les étapes suivantes :
a) on distille au moins une partie de la solution absorbante chargée en composés acides dans une première zone de régénération (Z1) de manière à produire une solution absorbante partiellement régénérée,
b) on prélève au moins une partie de la solution absorbante partiellement régénérée de la première zone de régénération (Z1), on sépare (B1) la solution prélevée en une fraction enrichie en composés acides et une fraction appauvrie en composés acides, et on augmente la pression de ladite fraction enrichie en composés acides par pompage,
c) on distille ladite fraction enrichie en composés acides obtenue à l'étape b) dans une deuxième zone de régénération (Z2) de manière à produire une solution absorbante régénérée,
d) on recycle au moins ladite fraction appauvrie en composés acides et ladite solution absorbante régénérée dans la zone de mise en contact (C1).

Selon l'invention, au cours de l'étape c) on peut effectuer au moins une étape complémentaire de prélèvement d'au moins une partie de solution absorbante en circulation dans la deuxième zone de régénération, on peut séparer la solution absorbante prélevée en un liquide enrichi en composés acides et un liquide appauvri en composés acides, le liquide appauvri en composés acides pouvant être recyclée dans la zone de mise en contact, le liquide enrichi en composés acides pouvant être réintroduit dans la deuxième zone de contact.

La première et la deuxième zone de régénération peuvent être disposées dans une colonne de régénération. Dans ce cas, on peut effectuer l'étape b) dans un dispositif disposé à l'intérieur de ladite colonne de régénération.

Alternativement, la première zone de régénération peut être disposée dans une première colonne, la deuxième zone de régénération peut être disposée dans une deuxième colonne.

Avant d'effectuer l'étape a), on peut chauffer la solution absorbante chargée en composés acides, puis on peut séparer de la solution absorbante un flux appauvri en composés acides et on peut recycler le flux en l'introduisant dans la zone de mise en contact.

La solution absorbante chargée en composés acides peut être chauffée à une température comprise entre 50°C et 150°C.

Dans la première zone de régénération et dans la deuxième zone de régénération, on peut distiller la solution absorbante de manière à produire une solution absorbante régénérée appauvrie en composés acides en libérant des composés acides sous forme gazeuse.

La zone de contact peut être composée d'une colonne garnie de moyens de mise en contact entre un gaz et un liquide, et dans lequel à l'étape d), la fraction appauvrie en composés acides et la solution absorbante régénérée peuvent être introduites en tête de la colonne.

On augmente la pression de ladite fraction enrichie en composés acides par pompage de manière à ce que la deuxième zone de régénération fonctionne à une pression plus élevée que la première zone de régénération.

La deuxième zone de régénération peut fonctionner à une température plus élevée que dans la première zone de régénération.

A l'étape b), on peut utiliser l'une des techniques de séparation suivantes: décantation, centrifugation, filtration.

La solution absorbante peut comporter un composé réactif en phase aqueuse, le composé réactif étant choisi dans le groupe constitué par : les amines, les alcanolamines, les polyamines, les acides aminés, les sels alcalins d'acides aminés, les amides, les urées, les phosphates, les carbonates et les borates de métaux alcalins.

L'effluent gazeux peut être choisi dans le groupe constitué par le gaz naturel, le gaz de synthèse, les fumées de combustion, les gaz de raffinerie, les gaz obtenus en queue du procédé Claus, les gaz de fermentation de biomasse.

Le fait de prélever une portion de la solution absorbante au cours de la régénération permet de réduire le débit de solution absorbante à régénérer et, donc, de diminuer l'énergie nécessaire pour effectuer la régénération.

D'autres caractéristiques et avantages de l'invention seront mieux compris et apparaîtront clairement à la lecture de la description faite ci-après en se référant aux dessins parmi lesquels :
- la figure 1 présente un mode de réalisation du procédé pas selon l'invention,
- les figures 2 et 6 schématisent des variantes du procédé de la figure 1,
- les figures 3 (pas selon l'invention), 4 (selon l'invention) et 5 (pas selon l'invention) représentent des réalisations particulières de la zone de régénération.

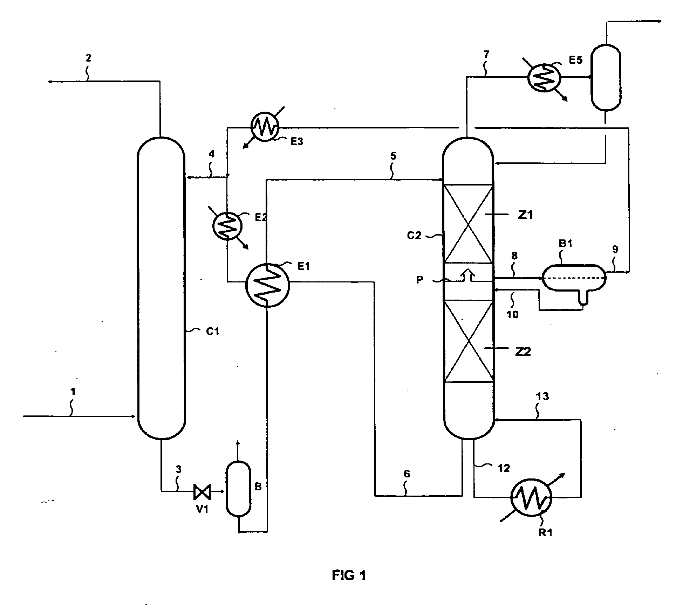

Sur la figure 1, l'effluent gazeux à désacidifier circulant dans le conduit 1 est mis en contact dans la colonne d'absorption C1 avec la solution absorbante arrivant par le conduit 4. La colonne C1 est équipée d'interne de mise en contact gaz/liquide, par exemple des plateaux de distillation, un garnissage structuré ou disposé en vrac. Le procédé de désacidification selon l'invention peut être appliqué à différents effluents gazeux. Par exemple, le procédé permet de décarbonater des fumées de combustion, de désacidifier du gaz naturel ou un gaz obtenu en queue du procédé Claus. Le procédé permet également de retirer les composés acides contenus dans les gaz de synthèse, dans les gaz de conversion dans les centrales intégrées de combustion du charbon ou du gaz naturel, et dans les gaz issus de la fermentation de biomasse.

Dans la colonne C1, les composés réactifs de la solution absorbante réagissent avec les composés acides à capter de façon à former un sel soluble dans la solution. Le gaz appauvri en composés acides est évacué de C1 par le conduit 2. La solution absorbante enrichie en composés acides, sous forme de sels dissous dans l'eau, est évacuée de C1 par le conduit 3. Cette solution absorbante enrichie en composés acides comporte néanmoins une proportion, qui peut être importante, de composés réactifs n'ayant pas réagi.

La solution absorbante est une solution aqueuse comportant un ou plusieurs composés réactifs. De préférence, on choisit une solution absorbante qui comporte des composés qui réagissent de manière réversible avec les composés acides, tels que l'H₂S et le CO₂. Selon l'invention, on choisit un composé réactif qui, en phase aqueuse, présente la propriété de former deux phases liquides séparables lorsqu'il a absorbé une quantité déterminée de composés acides et lorsque la température est supérieure à une température critique. En d'autres termes, on choisit le composé réactif de telle sorte que la solution absorbante chargée en composés acides forme deux phases liquides lorsque sa température dépasse une température critique de démixtion, c'est-à-dire un seuil de température. La composition de la solution absorbante mise en oeuvre dans le procédé selon l'invention est détaillée ci-après.

En référence à la figure 1, la solution absorbante circulant dans le conduit 3 peut être détendue à travers l'organe de détente V1 de manière à vaporiser une partie des composés acides absorbés et éventuellement des hydrocarbures co-absorbés dans le cas de l'utilisation du procédé selon l'invention pour la désacidification d'un gaz naturel. La fraction vapeur produite par la détente dans V1 est séparée de la solution absorbante et évacuée en tête du ballon B. Selon sa composition, cette fraction vapeur peut être recyclée en amont du procédé, être utilisée comme gaz combustible ou bien être mélangée avec le flux circulant dans le conduit 7. Alternativement, notamment dans les cas d'application du procédé selon l'invention à la décarbonatation des fumées de combustion, la solution absorbante 3 peut ne pas subir de détente et de séparation. Dans ce cas le conduit 3 est directement connecté à l'échangeur E1.

Ensuite, la solution absorbante est envoyée dans l'échangeur de chaleur E1. Elle ressort à une température plus élevée par le conduit 5. Dans l'échangeur de chaleur E1, la solution absorbante chargée en composés acides est chauffée jusqu'à atteindre une température supérieure à la température critique à laquelle la solution chargée en composés acides forme deux phases liquides séparables. Par exemple, la solution absorbante chargée en composés acides est chauffée à une température comprise entre 50°C et 150°C, de préférence entre 70°C et 120°C.

La solution absorbante issue de E1 est introduite par le conduit 5 dans la colonne C2 pour être régénérée. La colonne C2 est équipée d'un rebouilleur R1 et d'interne de mise en contact gaz/liquide. Dans C2, les composés réactifs de la solution absorbante sont séparés des composés acides. Les composés acides sont libérés sous forme gazeuse et évacués de C2 par le conduit 7. Le flux 7 de vapeur d'eau riche en composés acides est partiellement condensé par refroidissement et les condensats sont renvoyés en tête de C2 à titre de reflux. Une partie de la solution absorbante est prélevée en fond de la colonne C2 par le conduit 12 pour être chauffée par le rebouilleur R1 et réintroduite par le conduit 13 dans le fond de la colonne C2. La solution absorbante régénérée est recueillie en fond de la colonne C2 par le conduit 6. Selon les propriétés de la solution absorbante, la température critique de démixtion est atteinte par chauffage dans E1 ou au cours de la régénération dans C2.

Selon l'invention, au cours de la régénération effectuée dans C2, on prélève au moins une portion de solution absorbante sous forme diphasique et on sépare ladite portion en deux fractions : une fraction appauvrie en composés acides et une fraction enrichie en composés acides. Cette séparation est possible du fait de la caractéristique particulière de la solution absorbante qui présente la propriété de former deux phases liquides séparables lorsqu'elle a absorbé une quantité déterminée de composés acides et lorsque la température est supérieure à une température critique. En effet, lors de l'étape de régénération effectuée dans C2, la solution absorbante est chauffée graduellement par de la vapeur d'eau provenant du rebouillage de la colonne effectué par R1. La solution absorbante voit donc sa température augmenter au fur et à mesure de sa progression vers le fond de la colonne C2. Par ailleurs, la solution absorbante s'appauvrit en composés acides au fur et à mesure de sa progression dans C2 par effet de régénération. En d'autres termes, les sels formés par réaction des composés réactifs de la solution absorbante avec les composés acides dans C1 se décomposent dans C2 en libérant les composés acides sous forme gazeuse et en produisant des composés réactifs régénérés. Lorsque la température de la solution absorbante est supérieure à la température critique et que la proportion de composés réactifs régénérés est suffisante, il y a apparition de deux phases séparables.

En référence à la figure 1, la colonne C2 comporte deux zones de mise en contact Z1 et Z2 afin de mettre en contact la vapeur générée par le rebouilleur R1 avec la solution absorbante arrivant par le conduit 5. Z1 et Z2 sont muni de plateaux de distillation, de garnissage structuré ou en vrac. Les zones Z1 et Z2 sont séparées par le plateau collecteur P. La solution absorbante introduite dans C2 par le conduit 5 s'écoule le long de la zone Z1 jusqu'au plateau collecteur P. Une portion ou l'intégralité du liquide collecté par le plateau P est introduit par le conduit 8 dans le dispositif de séparation B1, par exemple un ballon séparateur. Compte tenu de l'effet de la hausse de température dans la colonne C2 et de l'appauvrissement en composés acides, la solution absorbante recueillie par le plateau P est dans des conditions favorables à une séparation de phases. De préférence, on effectue l'étape de séparation par démixtion lorsque la solution absorbante a libéré au moins 10% molaire, de préférence au moins 20% molaire, des composés acides qu'elle contenait avant entrée dans la première zone de mise en contact Z1. En d'autres termes, la solution absorbante soutirée par le conduit 8 comporte une teneur en composés acides inférieur d'au moins 10% molaire, de préférence d'au moins 20% molaire, à la composition de la solution absorbante arrivant dans Z1 par le conduit 5.

Le plateau collecteur P est équipé de cheminées pour permettre le passage du gaz depuis la zone Z2 vers la zone Z1. Le plateau collecteur P peut éventuellement être équipé de déversoirs pour qu'une partie du liquide recueilli par le plateau P puisse être directement distribuée dans la zone Z2 sans être prélevée par le conduit 8.

Dans le dispositif B1, la solution absorbante peut être séparée par décantation, centrifugation ou filtration. Dans B1, la solution absorbante est séparée en une première fraction liquide enrichie en composés acides, c'est-à-dire enrichie en composés actifs ayant réagi avec les composés acides, et en une deuxième fraction liquide appauvrie en composés acides, c'est-à-dire enrichie en composés actifs n'ayant pas réagi.

La deuxième fraction liquide appauvrie en composés acides est évacuée de B1 par le conduit 9, refroidie par l'échangeur de chaleur E3 puis introduit par le conduit 4 dans la colonne d'absorption C1.

La première fraction liquide enrichie en composés acides est évacuée de B1 par le conduit 10 pour être introduite dans C2 en tête de la zone Z2 afin d'en poursuivre la régénération. La solution absorbante régénérée est évacuée en fond de la colonne C2 par le conduit 6.

La position du soutirage 8 est choisie notamment en fonction de l'évolution de la température subie par la solution absorbante dans C2 sous l'effet du rebouillage R1 et du reflux introduit en tête de C2.

La chaleur libérée par le refroidissement de la solution absorbante récupérée en fond de la colonne C2 peut être récupérée pour chauffer différents flux devant être régénérés. Par exemple, en référence à la figure 1, la solution absorbante circulant dans le conduit 6 permet de réchauffer, dans l'échangeur de chaleur E1, la solution absorbante chargée en composés acides circulant par le conduit 3. Ensuite, cette solution est refroidie par l'échangeur E2 à la température de fonctionnement de la colonne C1, puis elle est introduite dans C1 par le conduit 4.

La nature des composés réactifs de la solution absorbante peut être choisie en fonction de la nature du ou des composés acides à traiter pour permettre une réaction chimique réversible avec le ou les composés acides à traiter. La structure chimique des composés réactifs peut aussi être choisie de manière à obtenir par ailleurs une stabilité accrue de la solution absorbante dans les conditions d'utilisation.

Les composés réactifs peuvent être par exemple et de façon non limitative des amines (primaires, secondaires, tertiaires, cycliques ou non, aromatiques ou non, saturées ou non), des alcanolamines, des polyamines, des acides aminés, des sels alcalins d'acides aminés, des amides, des urées, des phosphates, des carbonates ou des borates de métaux alcalins.

Par exemple, on peut utiliser le composé réactif suivant : N,N,N',N'-Tétraméthylhexane-1,6-diamine, couramment nommé TMHDA.

Les composés réactifs peuvent être en concentration variable par exemple comprise entre 10% et 90% poids, de préférence entre 15% et 60% poids, de manière très préférée entre 20% et 50% poids, dans la solution aqueuse.

La solution absorbante peut contenir entre 10% et 90% poids d'eau.

Dans un mode de réalisation, les composés réactifs de la solution absorbante peuvent être mélangés avec une autre amine, contenant au moins une fonction amine primaire ou secondaire afin de jouer un rôle d'activateur. La solution absorbante peut contenir de l'activateur jusqu'à une concentration de 20% poids, de préférence inférieure à 15% poids, de préférence inférieure à 10% poids.

Ce type de formulation est particulièrement intéressante dans le cas du captage du CO₂ dans les fumées industrielles, ou le traitement du gaz naturel contenant du CO₂ au dessus de la spécification désirée. En effet, pour ce type d'applications, on cherche à augmenter la cinétique de captage du CO₂, afin de réduire la taille des équipements.

Une liste non exhaustive de composés pouvant être utilisés comme activateurs est donnée ci-dessous :
- MonoEthanolAmine,
- AminoEthylEthanolAmine,
- DiGlycolAmine,
- Pipérazine,
- N-(2-HydroxyEthyl)Pipérazine,
- N-(2-AminoEthyl)Pipérazine,
- N-MethylPipérazine,
- N-EthylPipérazine,
- N-PropylPipérazine,
- 1,6-HexaneDiAmine,
- 1,1,9,9-TetraMéthylDiPropylèneTriamine,
- Morpholine,
- Pipéridine,
- 3-(MetylAmino)PropylAmine,
- N-MethylBenzylAmine.

Dans un mode de réalisation, la solution absorbante, en particulier une solution absorbante à base de N,N,N',N'-tetramethylhexane-1,6-diamine, peut aussi contenir d'autres composés organiques. Ainsi, la solution absorbante selon l'invention peut contenir des composés organiques non réactif vis-à-vis des composés acides (couramment nommé "solvant physique"), et qui permettent d'augmenter la solubilité d'au moins un ou plusieurs composés acides de l'effluent gazeux. Par exemple la solution absorbante peut comporter entre 5% et 50% poids de solvant physique tel que des alcools, des ethers de glycol, des lactames, des pyrrolidones N-alkylées, des pipéridones N-alkylées, des cyclotétraméthylènesulfone, des N-alkylformamides, des N-alkylacétamides, des ethers-cétones ou des phosphates d'alkyles et leur dérivés. A titre d'exemple et de façon non limitative, il peut s'agir du méthanol, du tetraethylèneglycoldimethylether du sulfolane ou de la N-formyl morpholine.

Dans un mode de réalisation, la solution absorbante, en particulier une solution absorbante à base de N,N,N',N'-tetramethylhexane-1,6-diamine, peut aussi comprendre un acide organique ou inorganique. Une liste non exhaustive de composés acides pouvant être utilisés à cet effet est donnée ci-dessous :
- acide formique
- acide oxalique
- acide acétique
- acide propanoique
- acide butanoique
- acide aminé (Glycine, Taurine, etc.)
- acide phosphorique
- acide phosphoreux
- acide pyrophosphorique
- acide sulfurique
- acide sulfureux
- acide nitreux
- acide chlorhydrique.

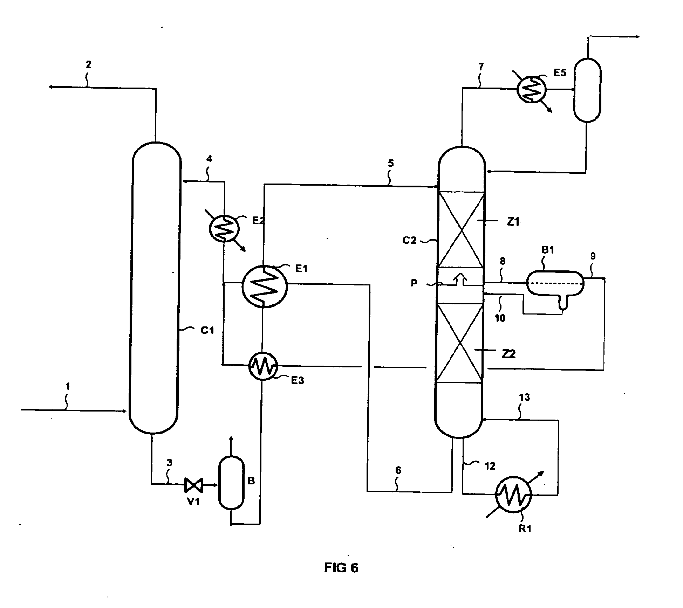

Le procédé schématisé par le figure 1 peut être optimisé en effectuant une intégration thermique, comme représenté par la figure 6, afin d'améliorer le gain énergétique du procédé. Les références de la figure 6 identiques à celles de la figure 1 désignent les mêmes éléments. Sur la figure 6, le flux 9 est refroidi dans E3 par échange thermique avec la solution absorbante chargée issue de B. Ainsi, E3 effectue un préchauffage de la solution chargée en CO₂ avant introduction dans la colonne C2.

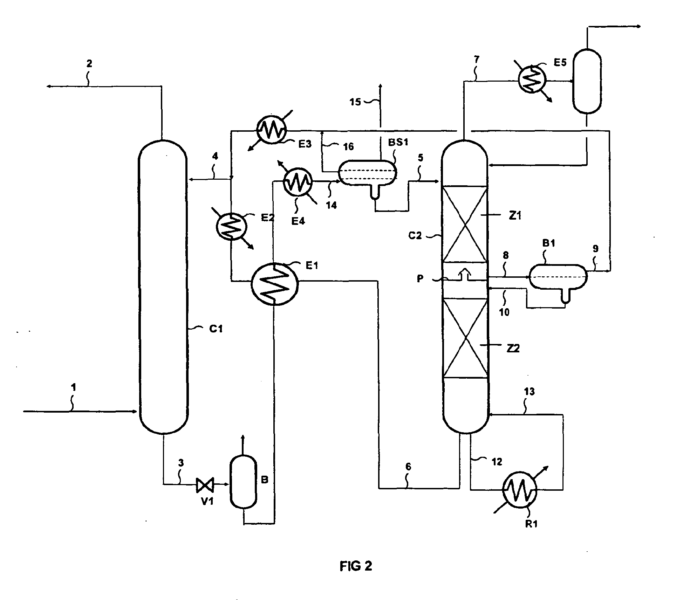

Le procédé schématisé par le figure 1 peut être complété en effectuant une étape de séparation de la solution absorbante en amont de la colonne C2, comme représenté par la figure 2. Les références de la figure 2 identiques à celles de la figure 1 désignent les mêmes éléments.

La solution absorbante chargée en composés acides obtenue en fond de C1 est réchauffée dans E1 puis dans l'échangeur E4. Elle ressort de E4 par le conduit 14 à une température plus élevée. Dans les échangeurs E1 et E4, la solution absorbante chargée en composés acides est chauffée jusqu'à dépasser la température critique à laquelle la solution chargée en composés acides forme deux phases liquides séparables. Par exemple, la solution absorbante chargée en composés acides est chauffée à une température comprise entre 50°C et 150°C, de préférence entre 70°C et 120°C. Ainsi, le fluide circulant dans le conduit 14 est composé de deux phases liquides séparables : une phase riche en composés acides et une phase pauvre en composés acides. De plus, sous l'effet de la hausse de température, une partie des composés acides est libérée sous forme gazeuse. Les trois phases du fluide circulant dans le conduit 14 sont séparées dans le ballon de séparation BS1. Par exemple, les deux phase liquides sont séparées dans BS1 par décantation, centrifugation ou filtration. La fraction gazeuse issue en tête de BS1 est extraite par le conduit 15 et peut éventuellement être mélangée au flux 7. Une première fraction liquide enrichie en composés acides, c'est-à-dire enrichie en composés actifs ayant réagi avec les composés acides, est envoyées par le conduit 5 dans la colonne de régénération C2. Une deuxième fraction liquide appauvrie en composés acides, c'est-à-dire enrichie en composés actifs n'ayant pas réagi, est évacuée de BS1 par le conduit 16 pour être introduit dans la colonne C1, par exemple en étant mélangée avec la portion de solution absorbante circulant dans le conduit 9.

Selon l'invention, on peut effectuer plusieurs soutirages de solution absorbante au cours de la régénération.

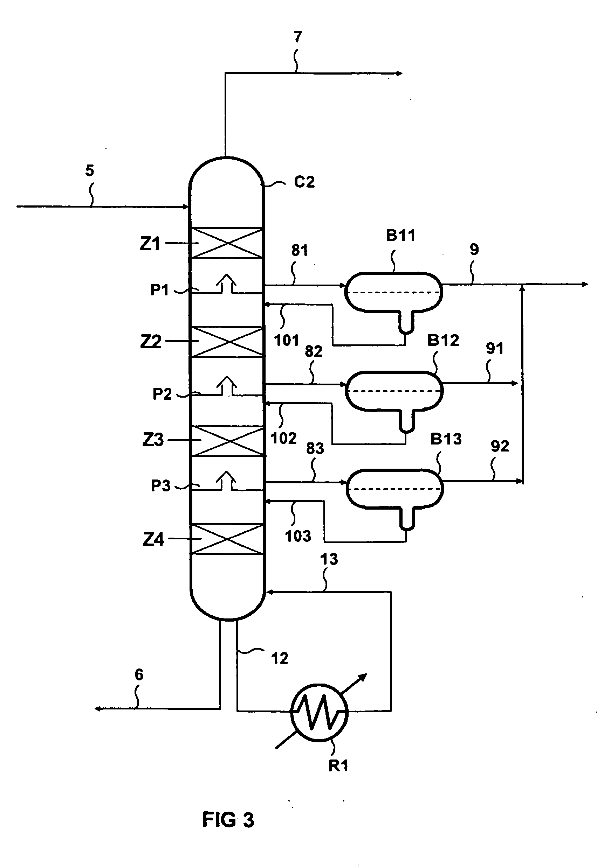

La figure 3 propose un mode de réalisation de la colonne C2 mise en oeuvre dans les procédés décrits en référence aux figures 1, 2 et 6, dans lequel on effectue trois soutirages de solution absorbante.

En référence à la figure 3, la colonne C2 comporte quatre zones de mise en contact distinctes Z1, Z2, Z3 et Z4 disposées de manière à ce que la solution absorbante passe successivement d'une zone à l'autre. Chaque zone est séparée de la précédente par l'un des plateaux collecteurs P1, P2 et P3. Les plateaux collecteurs sont équipés de cheminées pour permettre le passage ascendant du gaz depuis la zone de mise en contact située en amont vers la zone de mise en contact située en aval. Les plateaux collecteurs peuvent éventuellement être équipés de déversoirs pour qu'une partie du liquide recueilli puisse être directement distribuée sur la zone de mise en contact située en aval.

La solution absorbante introduite dans C2 par le conduit 5 circule à travers la zone Z1, puis est collectée par le plateau P1. Le conduit 81 prélève au moins une partie du liquide collecté par P1 pour l'introduire dans le dispositif de séparation B11. Le conduit 9 permet d'évacuer de B11 une fraction de solution appauvrie en composés acides. Le conduit 101 renvoie la fraction de solution absorbante chargée en composés acides depuis le ballon B11 dans C2 en tête de la zone de mise en contact Z2.

La solution absorbante introduite dans C2 par le conduit 101 circule à travers la zone Z2, puis est collectée par le plateau P2. Le conduit 82 prélève au moins une partie du liquide collecté par P2 pour l'introduire dans le dispositif de séparation B12. Le conduit 91 permet d'évacuer de B12 une fraction de solution appauvrie en composés acides. Le conduit 102 renvoie la fraction de solution absorbante chargée en composés acides depuis le ballon B12 dans C2 en tête de la zone de mise en contact Z3.

La solution absorbante introduite dans C2 par le conduit 102 circule à travers la zone Z3, puis est collectée par le plateau P3. Le conduit 83 prélève au moins une partie du liquide collecté par P3 pour l'introduire dans le dispositif de séparation B13. Le conduit 92 permet d'évacuer de B13 une fraction de solution appauvrie en composés acides. Le conduit 103 renvoie la fraction de solution absorbante chargée en composés acides depuis le ballon B13 dans C2 en tête de la zone de mise en contact Z4.

La solution régénérée obtenue en fond de la zone de mise en contact Z4 est envoyé par le conduit 6 vers la colonne d'absorption C1.

Les fractions de solution absorbante appauvrie en composés acides évacués par les conduits 91 et 92 sont assemblés à celle arrivant par le conduit 9 afin d'être envoyées dans la colonne C1.

La régénération effectuée selon le schéma de la figure 3 permet d'évacuer trois fractions de solution absorbante par les conduits 9, 91 et 92.

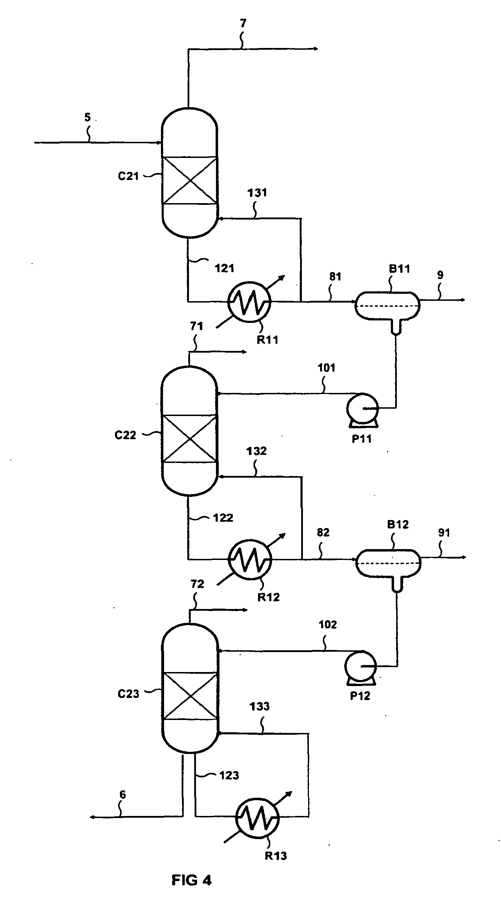

On peut également mettre en oeuvre plusieurs colonnes de régénération afin de pratiquer une régénération avec soutirage de solution absorbante lors du transfert de la solution absorbante d'une colonne à l'autre. La figure 4 propose de remplacer la colonne C2 mise en oeuvre dans les procédés décrits en référence aux figures 1, 2 et 6, par les trois colonnes C21, C22 et C23 afin d'effectuer deux soutirages de solution absorbante. Lesdites colonnes C21, C22 et C23 sont équipées de moyens de mise en contact gaz/liquide. Les références de la figure 4 identiques à celles des figures 1 et 2 désignent les mêmes éléments. Sans sortir du cadre de la présente invention, la colonne C2 peut être remplacée par deux colonnes, trois colonnes comme montré sur la figure 4, ou plus.

La solution absorbante arrivant par le conduit 5 est introduite dans la colonne C21. La fraction gazeuse libérée dans C21 est évacuée par le conduit 7. La solution absorbante partiellement régénérée obtenue en fond de la colonne C21 est envoyée par le conduit 121 pour être chauffée par le rebouilleur R11. Une portion de la solution absorbante issue de R11 est renvoyée dans la colonne C21 par le conduit 131. La portion restante de solution absorbante est introduite par le conduit 81 dans le ballon séparateur B11. Le conduit 9 permet d'évacuer de B11 une fraction de solution appauvrie en composés acides. Le conduit 101 renvoie la fraction de solution absorbante chargée en composés acides dans la colonne C22.

La fraction gazeuse libérée dans C22 est évacuée par le conduit 71. Une portion de la solution absorbante issue de R12 est renvoyée dans la colonne C22 par le conduit 132. La portion restante de solution absorbante est introduite par le conduit 82 dans le ballon séparateur B12. Le conduit 91 permet d'évacuer de B12 une fraction de solution appauvrie en composés acides. Le conduit 102 renvoie la fraction de solution absorbante chargée en composés acides dans la colonne C23.

La fraction gazeuse libérée dans C23 est évacuée par le conduit 72. La solution absorbante partiellement régénérée obtenue en fond de la colonne C22 est envoyée par le conduit 122 pour être chauffée par le rebouilleur R12, puis introduite par le conduit 133 dans la colonne C23.

La solution absorbante régénérée est obtenue et évacuée en fond de C23 par le conduit 6 pour être envoyée vers la colonne d'absorption C1.

La régénération effectuée selon le schéma de la figure 4 permet d'évacuer deux fraction de solution absorbante par les conduits 9 et 91. Le fraction de solution absorbante appauvrie en composés acides évacuée par le conduit 91 est assemblée à celle circulant dans le conduit 9 pour être envoyées vers la colonne C1.

Dans le procédé décrit en référence à la figure 4, chacune des colonnes peut éventuellement fonctionner à des pressions différentes. En référence à la figure 4, dans le cas ou la pression est plus importante dans C23 que dans C22, et plus importante dans C22 que dans C21, l'alimentation liquide des colonnes est montée en pression à l'aide des pompes P11 et P12. Au fur et à mesure de la régénération de la solution absorbante et grâce à la démixtion entre les colonnes, la solution absorbante s'appauvrie en amine, permettant une régénération à plus haute température et donc à plus haute pression. Cette configuration spécifique du procédé selon l'invention est avantageuse dans les cas ou l'on cherche à comprimer les flux 7, 71 et 72 dans une étape ultérieure du procédé, par exemple dans le cas d'une liquéfaction ultérieure de ces flux. En d'autres termes, la colonne C21 fonctionne à une pression P1. Après séparation dans le ballon B11, on comprime par la pompe P11 la fraction chargée en composés acides jusqu'à une pression P2, puis la fraction chargé en composés acides à la pression P2 est introduite dans la colonne C22. La colonne C22 fonctionne à la pression P2. Ainsi, le gaz 7 libéré en tête de C21 est à une pression P1 inférieure à la pression P2 du gaz 71 libéré en tête de C22. De la même façon, s'il existe une colonne C23, elle peut fonctionner à une pression P3 supérieure à P2 grâce au pompage effectué par P12. De plus, la colonne C22 peut fonctionner à une température plus élevée que la colonne C21. De la même manière la colonne C23 peut fonctionner à une température plus élevée que la colonne C22.

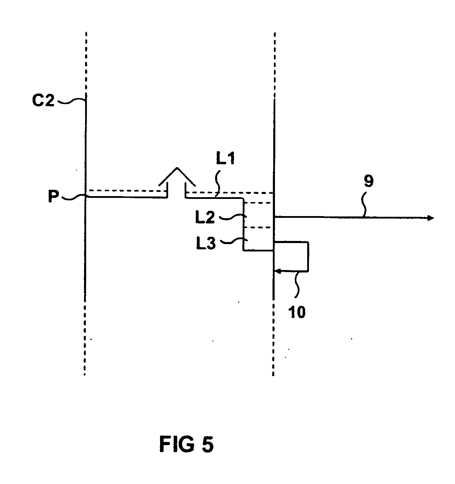

La figure 5 schématise un autre mode de réalisation de la colonne C2 mise en oeuvre dans les procédés décrits en référence aux figures 1, 2 et 3, dans lequel l'étape de séparation est effectuée par un moyen disposé à l'intérieur de la colonne C2. En référence à la figure 5, la solution absorbante L1 en émulsion est collectée sur le plateau P qui est équipé d'un déversoir dans lequel la solution absorbante décante. Les deux fractions L2 et L3 peuvent alors être respectivement soutirées par les conduits 9 et 10 afin d'être soit réinjectée plus bas dans la colonne (conduit 10), soit retournée vers la zone d'absorption (conduit 9).

Le procédé et ses avantages selon la présente invention sont illustrés par les exemples de fonctionnement présentés ci-dessous.

Dans les exemples 1, 2 et 3, on effectue la décarbonatation des fumées en post-combustion, par une solution aqueuse de TMHDA à 35% poids, ayant capté 2,5 mole de CO₂ par kilogramme de solution absorbante en fond de la colonne d'absorption. Cette solution absorbante est envoyée dans la colonne de régénération ayant une température moyenne de 90°C, supérieure à la température critique de la solution aqueuse de TMHDA. Le débit de solution absorbante est de 1000 kg/h.

Exemple 1 : Dans une mise en oeuvre classique —c'est-à-dire un procédé selon la figure 1 dans lequel la colonne de régénération C2 comporte une zone unique de mise en contact et pas de soutirage 8- , l'ensemble du débit de solution absorbante circulant dans la colonne d'absorption C1 circule également dans la colonne de régénération C2. De bas en haut de la colonne de régénération C2, la solution absorbante s'appauvrit en CO₂, atteignant une concentration nulle de CO₂ en fond de C2. La solution absorbante ainsi régénérée est renvoyée en tête de la colonne C1.

Exemple 2 (pas selon l'invention) : Dans une mise en oeuvre du procédé selon la figure 1, où l'on soutire la phase pauvre en CO₂ lorsqu'elle représente 20% en masse du débit total de solution absorbante, on réalise un soutirage lorsque la concentration globale en CO₂ atteint 1,2 moles de CO₂ par kilogramme de solution absorbante en fond de la zone Z1. Après séparation liquide-liquide dans B1, un débit de 200 kg/h ne contenant pas de CO₂ est renvoyé par le conduit 9 en tête de la colonne d'absorption C1 et un débit de 800 kg/h ayant une concentration de CO₂ de 1,5 moles par kilogramme de solution absorbante est renvoyé dans la zone Z2 par le conduit 10.

Exemple 3 (pas selon l'invention) : Dans une mise en oeuvre du procédé selon la figure 3, où on soutire une phase pauvre en CO₂ lorsqu'elle représente 10% poids du débit total, on réalise trois soutirages.

Le premier soutirage est réalisé par le conduit 81 lorsque la concentration globale en CO₂ atteint 2,1 moles de CO₂ par kilogramme de solution absorbante en fond de la zone Z1. Après séparation liquide-liquide dans B11, un débit de 100 kg/h ne contenant pas de CO₂ est alors renvoyé en tête de la colonne d'absorption C1 par le conduit 9 et un débit de 900 kg/h ayant une concentration de CO₂ de 2,3 moles par kilogramme de solution absorbante est renvoyé dans la zone Z2 par le conduit 101.

Le deuxième soutirage est réalisé par le conduit 82 lorsque la concentration globale en CO₂ atteint 1,5 moles de CO₂ par kilogramme de solution absorbante en fond de Z2. Après séparation liquide-liquide B12, un débit de 90kg/h de solution absorbante ne contenant pas de CO₂ peut alors être renvoyée en tête de la colonne d'absorption C1 par le conduit 91 et un débit de 810 kg/h ayant une concentration de CO₂ de 1,63 moles par kilogramme de solution absorbante est renvoyé dans la zone Z3 par le conduit 102.

Le troisième soutirage est réalisé par le conduit 83 lorsque la concentration globale en CO₂ atteint 0,8 moles de CO₂ par kilogramme de solution absorbante en fond de la zone Z3. Après séparation liquide-liquide B13, un débit de 81 kg/h de solution absorbante ne contenant pas de CO₂ est renvoyée en tête de la colonne d'absorption C1 par le conduit 92 et un débit de 729 kg/h ayant une concentration de CO₂ de 0,89 moles par kilogramme de solution absorbante est renvoyé dans la zone Z4 par le conduit 103.

Les exemples 1 à 3 mettent en évidence l'intérêt d'un procédé mettant en oeuvre une démixtion et séparation de la solution absorbante en cours de régénération. En effet, en réalisant une ou plusieurs séparations liquide-liquide, on réduit le débit de solution absorbante dans le régénérateur C2 et on régénère une solution absorbante plus riche en CO₂, ce qui facilite la régénération.

### Exemple 4 :

Le gaz à traiter est décrit dans le tableau suivant :

| | | |
|---|---|---|
| Flux | | 1 |
| Composition (%mol) | | |
| | CO2 | 0.3 |
| | N2 | 0.63 |
| | H2O | 0.7 |
| Température (°C) | | 30 |
| Pression (bar) | | 1 |
| Débit gaz (t/h) | | 2520 |
| Débit CO2 (t/h) | | 1036 |

Le procédé utilise une solution absorbante utilisant la TMHDA à 50% poids et capte 95% du CO₂ contenu dans le flux 1.

Dans une configuration (1) connue de l'état de l'art, la colonne de régénération comporte une seule section de régénération et aucun soutirage de la solution absorbante n'est effectué, aucune séparation de phase n'est prise en compte. En d'autre terme, la configuration (1) correspond à un procédé selon la figure 1 dans lequel la colonne de régénération C2 comporte une zone unique de mise en contact et pas de soutirage 8.

A titre de comparaison, la configuration (2) correspond au procédé selon la figure 1. La colonne C2 comporte deux sections de régénération Z1 et Z2, la solution absorbante est prélevée sur le plateau P, séparée dans B1, le flux 9 étant retourné dans C1 après avoir été refroidi dans E3, le flux 10 étant retourné dans C2 afin d'en poursuivre la régénération.

La configuration (3) correspond au procédé selon la figure 6. Par rapport à la configuration (2), le flux 9 est refroidi dans E3 par échange thermique avec la solution absorbante chargée, faisant office de préchauffage pour la colonne C2. Cette intégration thermique permet d'aller plus loin dans le gain énergétique du procédé.

Le tableau suivant indique l'énergie de régénération consommée dans chacune des configuration (1) , (2) et (3) :

| Configuration | 1 | 2 | 3 |
|---|---|---|---|
| Puissance régénération (MW) | 872 | 820 | 750 |
| Gain (%) | - | 6% | 14% |

L'exemple 4 montre un gain énergétique important sur la chaleur de régénération de la solution absorbante.

### Exemple 5 (selon l'invention) :

Dans l'exemple 5, le gaz à traiter, les performances et la configuration (1) restent identiques à ceux de l'exemple 4.

La configuration (4), correspondant au procédé selon la figure 4, comporte deux colonnes qui fonctionnent à des pressions différentes (dans la configuration (4), la colonne C23 de la figure 4 n'est pas mise en oeuvre). C21 fonctionne à 2,5 bars et 125°C avec une solution absorbante à 50% poids, de façon identique à la colonne de régénération dans la configuration (1). Après séparation des phases, la solution absorbante ne contient plus que 33% poids de TMHDA, ce qui permet de poursuivre la régénération dans C22 à une température plus élevée. C22 fonctionne à 8 bars et 160°C avec une solution absorbante à 33% poids.

Le tableau suivant montre les résultats de la configuration (4) par rapport à la configuration (1), sans démixtion de la solution absorbante et dans une seule colonne de régénération.

| Configuration | 1 | 4 |
|---|---|---|
| Puissance régénération (MW) | 872 | 740 |
| Gain (%) | - | 15% |
| CO2 à 2,5 bars (t/h) | 986 | 494 |
| CO2 à 8 bars (t/h) | 0 | 492 |

L'exemple 5 montre l'avantage énergétique de la configuration (4) avec 2 colonnes de régénération (gain de 15%). Un second avantage de cette configuration est l'obtention de 50% poids du flux de CO₂ à une pression plus élevée (8 bars au lieu de 2,5 bars). Dans l'optique de la compression du flux de CO₂, par exemple pour le transporter, le gain sur la section aval de compression sera très notable.

## Revendications

1. Procédé de désacidification d'un effluent gazeux comportant au moins un composé acide du groupe constitué par l'hydrogène sulfuré et le dioxyde de carbone, dans lequel on met en contact l'effluent gazeux avec une solution absorbante, la solution absorbante comportant au moins un composé réactif en phase aqueuse, dans une zone de contact (C1) de manière à obtenir un effluent gazeux appauvri en composés acides et une solution absorbante chargée en composés acides, la solution absorbante étant choisie pour sa propriété de former deux phases liquides séparables lorsqu'elle a absorbé une quantité de composés acides et qu'elle est chauffée, et dans lequel on régénère la solution absorbante chargée en composés acides en effectuant les étapes suivantes :
a) on distille au moins une partie de la solution absorbante chargée en composés acides dans une première zone de régénération (Z1) de manière à produire une solution absorbante partiellement régénérée,
b) on prélève au moins une partie de la solution absorbante partiellement régénérée de la première zone de régénération (Z1), on sépare (B1) la solution prélevée en une fraction enrichie en composés acides et une fraction appauvrie en composés acides, et on augmente la pression de ladite fraction enrichie en composés acides par pompage,
c) on distille ladite fraction enrichie en composés acides obtenue à l'étape b) dans une deuxième zone de régénération (Z2) de manière à produire une solution absorbante régénérée,
d) on recycle au moins ladite fraction appauvrie en composés acides et ladite solution absorbante régénérée dans la zone de mise en contact (C1).

2. Procédé selon la revendication 1, dans lequel la deuxième zone de régénération fonctionne à une température plus élevée que dans la première zone de régénération.

3. Procédé selon l'une des revendications précédentes, dans lequel au cours de l'étape c) on effectue au moins une étape complémentaire de prélèvement d'au moins une partie de solution absorbante en circulation dans la deuxième zone de régénération, on sépare la solution absorbante prélevée en un liquide enrichi en composés acides et un liquide appauvri en composés acides, le liquide appauvri en composés acides étant recyclée dans la zone de mise en contact, le liquide enrichi en composés acides étant réintroduit dans la deuxième zone de régénération.

4. Procédé selon l'une des revendications précédentes, dans lequel la première et la deuxième zone de régénération (Zl; Z2) sont disposées dans une colonne de régénération (C2).

5. Procédé selon la revendication 4, dans lequel on effectue l'étape b) dans un dispositif disposé à l'intérieur de ladite colonne de régénération (C2).

6. Procédé selon l'une des revendications 1 à 3, dans lequel la première zone de régénération est disposée dans une première colonne, la deuxième zone de régénération est disposée dans une deuxième colonne.

7. Procédé selon la revendication 1, dans lequel avant d'effectuer l'étape a), on chauffe la solution absorbante chargée en composés acides, on sépare de la solution absorbante un flux appauvri en composés acides et on recycle le flux en l'introduisant dans la zone de mise en contact.

8. Procédé selon la revendication 7, dans lequel, la solution absorbante chargée en composés acides est chauffée à une température comprise entre 50°C et 150°C.

9. Procédé selon l'une des revendications précédentes, dans lequel on distille dans la première zone de régénération (Z1) et dans la deuxième zone de régénération (Z2) la solution absorbante de manière à produire une solution absorbante régénérée appauvrie en composés acides en libérant des composés acides sous forme gazeuse.

10. Procédé selon l'une des revendications précédentes, dans lequel la zone de contact (C1) est composée d'une colonne garnie de moyens de mise en contact entre un gaz et un liquide, et dans lequel à l'étape d), la fraction appauvrie en composés acides et la solution absorbante régénérée sont introduites en tête de la colonne.

11. Procédé selon l'une des revendications précédentes, dans lequel, à l'étape b) on utilise l'une des techniques de séparation suivantes: décantation, centrifugation, filtration.

12. Procédé selon l'une des revendications précédentes, dans lequel le composé réactif étant choisi dans le groupe constitué par : les amines, les alcanolamines, les polyamines, les acides aminés, les sels alcalins d'acides aminés, les amides, les urées, les phosphates, les carbonates et les borates de métaux alcalins.

13. procédé selon l'une des revendications précédentes, dans lequel l'effluent gazeux est choisi dans le groupe constitué par le gaz naturel, le gaz de synthèse, les fumées de combustion, les gaz de raffinerie, les gaz obtenus en queue du procédé Claus, les gaz de fermentation de biomasse.

## Claims

1. A method of deacidizing a gaseous effluent comprising at least one acid compound of the group made up of hydrogen sulfide and carbon dioxide, wherein the gaseous effluent Is contacted with an absorbent solution, the absorbent solution comprising at least one reactive compound in aqueous phase, in a contact zone (C1) so as to obtain a gaseous effluent depleted In acid compounds and an absorbent solution laden with acid compounds, the absorbent solution being selected for its property of forming two separable liquid phases when it has absorbed an amount of acid compounds and it is heated, and wherein the absorbent solution laden with acid compounds is regenerated by carrying out the following stages:
a) distilling at least part of the absorbent solution laden with acid compounds in a first regeneration zone (Z1) so as to produce a partly regenerated absorbent solution,
b) withdrawing at least part of the partly regenerated absorbent solution from first regeneration zone (Z1), separating (B1) the solution withdrawn Into a fraction enriched in acid compounds and a fraction depleted in acid compounds, and raising the pressure of said fraction enriched in acid compounds by pumping,
c) distilling said fraction enriched in acid compounds obtained In stage b) in a second regeneration zone (Z2) so as to produce a regenerated absorbent solution.
d) recycling at least said fraction depleted in acid compounds and said regenerated absorbent solution to contact zone (C1).

2. A method as claimed in claim 1, wherein the second regeneration zone operates at a higher temperature than the first regeneration zone.

3. A method as claimed in any one of the previous claims wherein, in stage c), at least one complementary stage of withdrawing at least part of the absorbent solution circulating In the second regeneration zone is carried out, the absorbent solution withdrawn Is separated into a liquid enriched in acid compounds and a liquid depleted In acid compounds, the liquid depleted in acid compounds being recycled to the contact zone and the liquid enriched in acid compounds being fed again into the second regeneration zone.

4. A method as claimed in any one of the previous claims, wherein the first and second regeneration zones (Z1; Z2) are arranged in a regeneration column (C2).

5. A method as claimed in claim 4, wherein stage b) Is carried out in a device arranged within said regeneration column (C2).

6. A method as claimed in any one of claims 1 to 3, wherein the first regeneration zone is arranged in a first column and the second regeneration zone is arranged In a second column.

7. A method as claimed in claim 1 wherein, prior to carrying out stage a), the absorbent solution laden with acid compounds is heated, a stream depleted in acid compounds is separated from the absorbent solution and the stream is recycled by feeding it into the contact zone.

8. A method as claimed in claim 7, wherein the absorbent solution laden with acid compounds is heated to a temperature ranging between 50°C and 150°C.

9. A method as claimed in any one of the previous claims, wherein the absorbent solution is distilled in first regeneration zone (Z1) and in second regeneration zone (Z2) so as to produce a regenerated absorbent solution depleted in acid compounds by releasing acid compounds in gaseous form.

10. A method as claimed in ony one of the previous claims, wherein contact zone (C1) consists of a column provided with means for contacting a gas and a liquid, and wherein, in stage d), the fraction depleted in acid compounds and the regenerated absorbent solution are fed to the top of the column.

11. A method as claimed in any one of the previous claims wherein, in stage b), one of the following separation techniques is used: decantation, centrifugation, filtration.

12. A method as claimed in any one of the previous claims, wherein the reactive compound is selected from the group consisting of: amines, alkanolamines, polyamines, amino-acids, amino-acid alkaline salts, amides, ureas, alkali metal phosphates, carbonates and borates.

13. A method as claimed In any one of the previous claims, wherein the gaseous effluent is selected from the group consisting of naturel gas, syngas, combustion fumes, refinery gas, Claus tail gas, biomass fermentation gas.

## Patentansprüche

1. Verfahren zur Entsäuerung eines Abgases, das zumindest eine saure Verbindung der aus Schwefelwasserstoff und Kohlendioxid bestehenden Gruppe umfasst, worin das Abgas mit einer absorbierenden Lösung, wobei die absorbierende Lösung zumindest eine in wässriger Phase reaktionsfähige Verbindung umfasst, in einer Kontaktzone (C1) derart in Kontakt gebracht wird, dass ein an sauren Verbindungen abgereichertes Abgas und eine mit sauren Verbindungen beladene absorbierenden Lösung erhalten wird, wobei die absorbierende Lösung wegen ihrer Eigenschaft ausgewählt ist, zwei trennbare flüssige Phasen zu bilden, wenn sie eine Menge an sauren Verbindungen absorbiert hat und erwärmt wird, und worin die mit sauren Verbindungen beladene absorbierende Lösung durch die Ausführung der folgenden Schritte regeneriert wird:
a) das Destillieren von zumindest einem Teil der mit sauren Verbindungen beladenen absorbierenden Lösung in einer ersten Regenerationszone (Z1), um eine teilweise regenerierte absorbierende Lösung zu erzeugen.
b) das Entnehmen von zumindest einem Teil der teilweise regenerierten absorbierenden Lösung aus der ersten Regenerationszone (Z1), das Trennen (B1) der entnommenen Lösung in eine an sauren Verbindungen angereicherte Fraktion und eine an sauren Verbindungen abgereicherte Fraktion, und das Anheben des Drucks der an sauren Verbindungen angereicherte Fraktion durch Pumpen,
c) das Destillieren der in Schritt b) erhaltenen, an sauren Verbindungen angereicherten Fraktion in einer zweiten Regenerationszone (Z2), um eine regenerierte absorbierende Lösung zu erhalten,
d) das Rückführen von zumindest der an sauren Verbindungen abgereicherten Fraktion und der regenerierten absorbierenden Lösung in die Kontaktierungszone (C1).

2. Verfahren nach Anspruch 1, worin die zweite Regenerationszone bei einer höheren Temperatur als in der ersten Regenerationszone arbeitet.

3. Verfahren nach einem der vorangegangenen Ansprüche, worin in Schritt c) zumindest ein zusätzlicher Schritt des Entnehmens von zumindest einem Teil der in der zweiten Regenerationszone zirkulierenden absorbierenden Lösung ausgeführt wird und die entnommene absorbierende Lösung in eine an sauren Verbindungen angereicherte Flüssigkeit und eine an sauren Verbindungen abgereicherte Flüssigkeit getrennt wird, wobei die an sauren Verbindungen abgereicherte Flüssigkeit in die Kontaktierungszone rückgeführt wird und die an sauren Verbindungen angereicherte Flüssigkeit wieder in die zweite Regenerationszone eingeleitet wird.

4. Verfahren nach einem der vorangegangenen Ansprüche, worin die erste und die zweite Regenerationszone (Z1; Z2) in einer Regeaerationskolonne (C2) angeordnet sind.

5. Verfahren nach Anspruch 4, worin Schritt b) in einer Vorrichtung ausgeführt wird, die im Inneren der Regenerationskolonne (C2) angeordnet ist.

6. Verfahren nach einem der Ansprüche 1 bis 3, worin die erste Regenerationszone in einer ersten Kolonne angeordnet ist und die zweite Regenerationszone in einer zweiten Kolonne angeordnet ist.

7. Verfahren nach Anspruch 1, worin vor dem Ausführen von Schritt a) die mit sauren Verbindungen geladene absorbierende Lösung erwärmt wird, ein an sauren Verbindungen abgereicherter Fluss von der absorbierenden Lösung abgetrennt wird und der Fluss rückgeführt wird, indem er in die Kontaktierungszone eingeleitet wird.

8. Verfahren nach Anspruch 7, worin die mit sauren Verbindungen beladene absorbierende Lösung auf eine Temperatur zwischen 50°C und 150°C erwärmt wird.

9. Verfahren nach einem der vorangegangenen Ansprüche, worin in der ersten Regenerationszone (Z1) und in der zweiten Regenerationszone (Z2) die absorbierende Lösung derart destilliert wird, dass eine an sauren Verbindungen abgereicherte, regenerierte absorbierende Lösung erzeugt wird, indem saure Verbindungen In Gasform freigesetzt werden.

10. Verfahren nach einem der vorangegangenen Ansprüche, worin die Kontaktzone (C1) aus einer Kolonne gebildet ist, die mit Mitteln ausgestattet ist, um ein Gas und eine Flüssigkeit in Kontakt zu bringen, und worin in Schritt d) die an sauren Verbindungen abgereicherte Fraktion und die regenerierte absorbierende Lösung am Kolonnenkopf eingeleitet werden.

11. Verfahren nach einem der vorangegangenen Ansprüche, worin in Schritt b) eines der folgenden Trennverfahren verwendet wird: Dekantieren, Zentrifugieren, Filtrieren.

12. Verfahren nach einem der vorangegangenen Ansprüche, worin die reaktionsfähige Verbindung aus der aus Aminen, Alkanolaminen, Polyaminen, Aminosäuren, Alkalisalzen von Aminosäuren, Amiden, Harnstoffen, Phosphaten, Alkalimetallcarbonaten und -boraten bestehenden Gruppe ausgewählt ist.

13. Verfahren nach einem der vorangegangenen Ansprüche, worin das Abgas aus der aus Erdgas, Synthesegas, Verbrennungsrauchen, Raffineriegasen, den am Ende des Claus-Verfahrens erhaltenen Gasen und Biomasse-Faulgasen bestehenden Gruppe ausgewählt ist.
